(19)

Europäisches Patentamt
European Patent Office
Office européen des brevets

(11) **EP 3 553 044 A1**

(12) **EUROPEAN PATENT APPLICATION**
published in accordance with Art. 153(4) EPC

(43) Date of publication:
**16.10.2019 Bulletin 2019/42**

(21) Application number: **17878862.6**

(22) Date of filing: **07.08.2017**

(51) Int Cl.:
*C05B 17/02* (2006.01)          *G06F 17/16* (2006.01)
*G05B 19/048* (2006.01)

(86) International application number:
**PCT/RU2017/050073**

(87) International publication number:
**WO 2018/106150 (14.06.2018 Gazette 2018/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **06.12.2016 RU 2016147741**

(71) Applicant: **Joint Stock Company "Rotec"
Moscow 115184 (RU)**

(72) Inventor: **LIFSHITS, Mikhail Valerievich
119034 Moscow (RU)**

(74) Representative: **Chimini, Francesco
Jacobacci & Partners S.p.A.
Piazza della Vittoria 11
25122 Brescia (IT)**

(54) **SYSTEM AND METHOD OF REMOTE OBJECT MONITORING**

(57) The invention relates to the on-line monitoring and prediction system (hereinafter referred to as "OMPS") and the method used therein for determining deviations in the behaviour of the monitored object. The technical result is improvement of accuracy of prediction of deviation of operating parameters of the monitored object through application of multiple predictive models of the monitored object operation and prompt deviation detection in each model reflecting the monitored object operation in the defined mode. The claimed method for prediction of and on-line monitoring of the objects status consists in performing the stages on which the data coming from the monitored object are processed, which characterize its technical status, a reference sample of the object performance indicators is created on the basis of these data, a state matrix is formed of the components of the reference points of the reference sample, wherein the values of the said performance indicators of the monitored object are components; the MSET method is used to analyse the obtained state matrix and construct empirical models to predict the state of the monitored object, which enables to determine the probability of occurrence of critical performance states of the object and to warn on their occurrence in order to avoid the failure of either the entire object or any part of it.

FIG.1

EP 3 553 044 A1

**Description**

FIELD OF THE INVENTION

The invention relates to the on-line monitoring and prediction system (hereinafter referred to as "OMPS") and the method used therein for determining deviations in the behaviour of the monitored object. The claimed invention can be used in various spheres of industry, public health, economics, social sphere, agriculture and other areas wherein the predictive modelling of the behaviour of an object and its on-line automated monitoring can be used.

BACKGROUND OF THE INVENTION

At present, all power generation objects are practically equipped with advanced APCS (automated process control system). Applied APCS in their nature are not the tools for analysis of changes in technical status although they are widely used to prevent emergency event. Incident and outage statistics indicates that autonomous and integrated in APCS power equipment monitoring and diagnostics systems are not efficient enough [1].

The monitoring of technical status is based on comparison of compliance of parameters and criteria values with their limits and rated values and parameters with reference power characteristics. Such systems function as a set of modules analysing the performance of various subsystems of the monitored object. A labour- intensive automated analysis of the monitoring systems operation with a large number of experts is expected for identification of changes in technical status and the search for their causes. The applied methods are useless in case of unreliable or incomplete information about limits and norms of key process parameters, criteria, relationship between parameters. In most of the cases it causes late identification of emerging defects, their uncontrolled development when technical status is functional, and brings the object to "dysfunctional" or "limit" status. Maintenance procedures are usually performed after activation of warning or emergency alarms. The equipment defects are identified after its opening which results in "under-repairs" due to absence of required spare parts and technical solutions for correction of problems.

Currently, it is important not only to identify the type of technical status, such as: "functional", "partially functional", "limit" but to track changes in the already identified (the first and the second) status as well [2]. The most acute object is a monitoring of changes in "functional" status of equipment caused by emergence of any defect of parts, units and systems of the existing variety for detection of unwanted trends and prediction of their development for prevention of incidents and accidents.

Currently, there are known several solutions implementing the processes of predictive modelling behaviour of the monitored object for identification of deviations of parameters of its technical status and prediction of the failure of different components.

There is known a device and method for monitoring technical unit, comprising a lot of systems namely power plant units (Patent RU2313815, SIEMENS AKTIENGESELLSCHAFT, 27.12.2007). This patent applies dynamic learning model for prediction of failure of the monitored object, namely, power unit. The model is based on using neuron networks and/or genetic algorithms and is implemented through the application of analysis module which searches in operating parameters or operating and structural parameters of system the relationships between operating parameters or operating or structural parameters using the AI methods and integrates identified relationships into a dynamic model as new relationships thereby improving it with regard to improvement of accuracy of prediction of system behaviour and thereby the dynamic model is enhanced with regard to improvement of the accuracy of prediction of system behaviour during operation of the system, wherein the analysis module identifies the output data which characterize the immediate and/or future behaviour in the system operation.

The disadvantage of this solution is an application of one model and the principle of neuron network which requires both complicated computing facilities and continuous learning determined by the complicated prediction model which prevents from fast and accurate identification of the future interruption of the monitored object operation.

There is known a system and method of prediction of life cycle of operation of gas turbine unit (application US20160160762, General Electric Company, 09.06.2016) comprising turbine status analysis unit determining the status based on the parameters such as temperature, vibration, etc., which are processed using physical model of the turbine. Each of the received parameters of the monitored object is assigned a weight coefficient, on the basis of which the object operation is monitored for further comparison with the parameters of the turbine operation and adjustment of its operation for increasing the life cycle.

This solution does not comprise modelling the process of operation of the turbine using learning model method based on reference samples of control parameters, namely MSET (Multivariate State Estimation method) [3]-[4] which prevents from fast and accurate identification of possible interruption of the performance of the monitored object using on-line learning the predictive equipment operation model.

There is known a system of on-line control of the process based on multivariate analysis (patent US8014880, Fisher-Rosemount Systems Inc., 06.09.2011) which analyses the object status based on multivariate model using training dataset obtained using sensors and realizes the development of a number of models of current status of performance of the equipment and models of normal status of equipment for their further comparison.

The disadvantage of this solution is the absence of updating the model depending on the operating mode of the monitored object and updating performance predictive models of the monitored object based on the filtering the reference sampling based on the parameters collected from the monitored object.

SUMMARY OF THE INVENTION

The object of the invention is to create a new system and a method implemented in it for on-line monitoring and diagnostics of the technical status of on-line monitoring, which will ensure the prediction of deviations in the future operation of the monitored object and promptly warn of the time of emerging such deviations.

The technical result is improvement of accuracy of prediction of deviation of operating parameters of the monitored object through application of multiple predictive models of the monitored object operation and prompt deviation detection in each model reflecting the monitored object operation in the defined mode.

The application of the MSET modelling principle has a wide range and can be used in various industries. Any object that can transmit parameters of its technical state with the help of various sensors, gauges, etc., can be a subject to prognostic monitoring [5].

The claimed result is achieved by implementing a method for on-line monitoring and prediction of the objects status, which consists in performing the following steps, wherein:

- receiving data from the monitored object, characterizing performance parameters of the said object;

- based on the collected object parameters, developing object parameters reference sample, consisting of the said parameters values being the sample points, wherein the said sample corresponds to a time interval of the monitored object continuous operation;

- developing the status matrix from points components of the reference sample wherein components are values of the said operating parameters of the monitored object;

- based on MSET (Multivariate State Estimation method) method with the said status matrix, the empirical models of prediction of a monitored object status are developed and each of these models reflects the set point of a monitored object status in multivariate space of the object operating parameters to a point, modeling an object status;

- based on the components inconsistency of the set point and the point, modeling an object status, the discrepancies components, based on which the criteria $T^2$ is calculated, where $T^2$ characterizes the deviation of the process parameters values of the monitored object from the model in the set point of space, wherein $T^2$ is a quadratic form of normalized discrepancies with coefficients being the elements of pseudoinverse matrix of correlation matrix for normalized discrepancies of the reference sample;

- malfunctions determination reflecting the impact degree of the object's operating parameters on the said deviation of the monitored object's process parameters as difference of criteria $T^2$ and normalized discrepancies' quadratic forms with coefficients of pseudoinverse matrix for the matrix developed from the said correlation matrix where the line and the column, corresponding to this indicator of the object operation, are zeroed;

- analysing of the collected information from the monitored object using developed empirical models by comparison of the monitored object's collected parameters with model parameters in defined time interval;

- determining through using the said criteria $T^2$ of the degree of deviation of the collected parameters of the monitored object in the specified time interval from the empirical models parameters and identifying malfunctions for such parameters;

- ranking the computed malfunctions to identify the parameters making the greatest contribution to the change of the monitored object status;

- modifying reference sample by its replenishment with points for a new time interval and filtration of points corresponding to the functioning mode described by the model and corresponding to the new functional status the monitored object;

- updating the empirical models based on filtered sample;
and

- generating a signal that informs about deviation of at least one parameter of the monitored object based on the updated model.

In particular embodiment, the empirical models are statistical and dynamic models.

In another particular embodiment, for each type of models the sampling rate is set.

In another particular embodiment, each model is specified by a set of matrix calculated using MSET method.

In another particular embodiment, when calculating T2 criteria the components of malfunctions are normalized based on average values of discrepancies and their mean quadratic deviations for a reference sample.

In another particular embodiment, the empirical models are developed for a multitude of different operating modes of the monitored object.

In another particular embodiment, in case of change of the monitored object operating mode, the empirical model corresponding to this mode is automatically switched.

In another particular embodiment, the defect matrix is developed based on the data characterizing the deviations of the monitored object parameters.

In another particular embodiment, the degree of the impact of malfunctions is determined for each identified defect based on the defect matrix.

In another particular embodiment, the degree of the impact is a weight coefficient reflecting the degree of the malfunction impact on the defect.

In another particular embodiment, in case of ranking the malfunctions the weight coefficients are summed up.

In another particular embodiment, the defect matrix is updated as data of the monitored object process parameters become available.

The claimed technical result is also achieved through the on-line monitoring and prediction system (OMPS) of the monitored objects status related to various technological means that comprises a group of sensors which are connected to the monitored object and transmit information about the parameters of the said object to primary controllers that are connected with the APCS main server of the monitored object, configured to accumulate data received from the controllers and the subsequent transfer of the said data to the OMPS local lower level comprising at least the OMPS lower level server, from which, through the data network, the information on the monitored object parameters is transmitted to the OMPS local upper level comprising the upper level server configured to execute the method of the on-line monitoring and prediction of the technological process status described above.

In particular embodiment of the claimed system the data from controllers to the OMPS local lower level are transmitted via LAN.

In another particular embodiment of the claimed system, the OMPS local lower level is a demilitarized area organized using firewalls.

In another particular embodiment of the claimed system, the information is received and transmitted via the OMPS local lower level through the said firewalls.

In another particular embodiment of the claimed system, the data is transmitted from the main server of APCS to the OMPS local lower level using OPC protocol (OLE for Process Control).

In another particular embodiment of the claimed system, the Internet is used as data transmission network.

In another particular embodiment of the claimed system, the information through Internet is transmitted using secured data link.

In another particular embodiment of the claimed system, the upper level server is configured to automatically update empirical models when data is received from the monitored object.

In another particular embodiment of the claimed system, the upper level server is configured to transmit information about the monitored object status to remote devices of users.

In another particular embodiment of the claimed system, the data is transmitted to remote devices of users using wired and/or wireless communication.

In another particular embodiment of the claimed system, Ethernet LAN is used as wired communication system.

In another particular embodiment of the claimed system the following wireless communication systems are selected: Wi-Fi, GSM, WiMax or MMDS (Multichannel Multipoint Distribution System).

In another embodiment of the claimed system the data about the monitored object status are transmitted using email messages and/or SMS and/or PUSH-notifications to remote devices of users.

BRIEF DESCRIPTION OF THE DRAWINGS

Fig. 1 illustrates the architecture of OMPS.

Fig. 2 illustrates the main stages of implementation of the claimed method.

Fig. 3 illustrates the graphic user interface of OMPS.

Fig. 4 illustrates the sequence of steps in performing predictive modelling.

DETAILED DESCRIPTION OF THE INVENTION

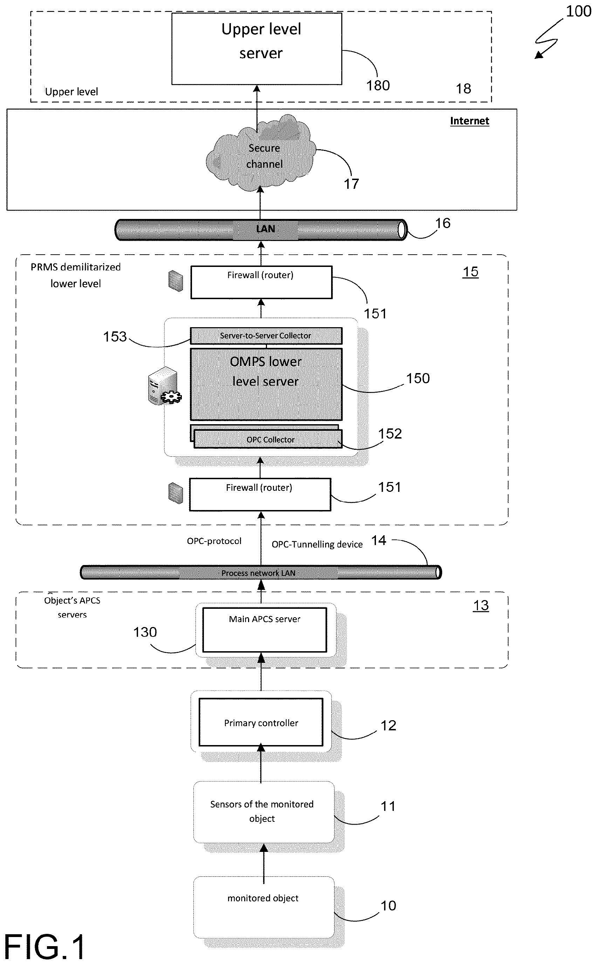

Fig.1 illustrates the common architecture of the claimed solution namely OMPS (100). OMPS (100) consists of lower (15) and upper (18) level systems. Both levels are implemented on servers (150, 180) performing special functions. The object of the lower level server (150) is collection, primary processing, buffering and transmission of data to the upper level server (180) whose task is the resolution of analytical problems related to monitoring and prediction of the monitored objects status (10).

The monitored object refers to various technical means, for example, power equipment (turbine units, various types of plants, reactors, etc.), equipment for monitoring the production process (conveyors, robotic equipment), heating equipment (boilers, pumps, etc.)

Transport vehicles (for example, cars, rail transport, air planes, etc.) can also serve as a monitored object.

Collection and transmission of data is based on two server scheme. The data acquisition process starts at the lower level, which is the level of the monitored (controlled) object (10), wherein the performance parameters values are recorded (for example, temperature, vibration, wear rate, rotation speed, current, voltage, frequency, etc.), using sensors (11) installed on the monitored object (10). The readings from the group of sensors (11) are sent to the primary controllers (12), from which they are then transmitted to the APCS main server (130).

The OMPS (100) lower level server (150) can be installed in its own cabinet in a specialized server room, in the immediate vicinity of the existing APCS servers of the object (13). Data from the process network (14) formed using one or several APCS (130) servers is transmitted to OMPS lower level server (150). Data to lower level server (150) can be transmitted using OPC (OLE for Process Control) protocol and OPC tunnelling technologies.

OMPS local lower level (15) can be designed as a demilitarized area arranged using firewalls (151) which receive data from APCS (130) and transmit data to the local upper level (18). Such scheme isolates the operation of the APCS of the object (130) and lower level system (15) and ensures integrity of received data in case of abnormal situations.

The process data collected from sensors (11) of the monitored object (10) are transmitted to single archive of the upper level server (180). Data is transmitted to the upper level server (180) using LAN, for example, Internet. Secured LAN data link can be used for transmission of these data without quality loss in the real time mode using synchronization of lower and (15) upper level (18) servers (150, 180). Additionally, collection of data in full at the upper level server (180) allows to perform detailed analysis of monitored object status by specialists working with the upper level system (18) which allows these specialists to monitor the status of all monitored objects (10).

The upper level server (180) is configured for analytical processing data in on-line mode automatically performed by empirical modelling means. Empirical models are built using statistical methods based on sampling values of process parameters of the item during operating period assumed as a reference.

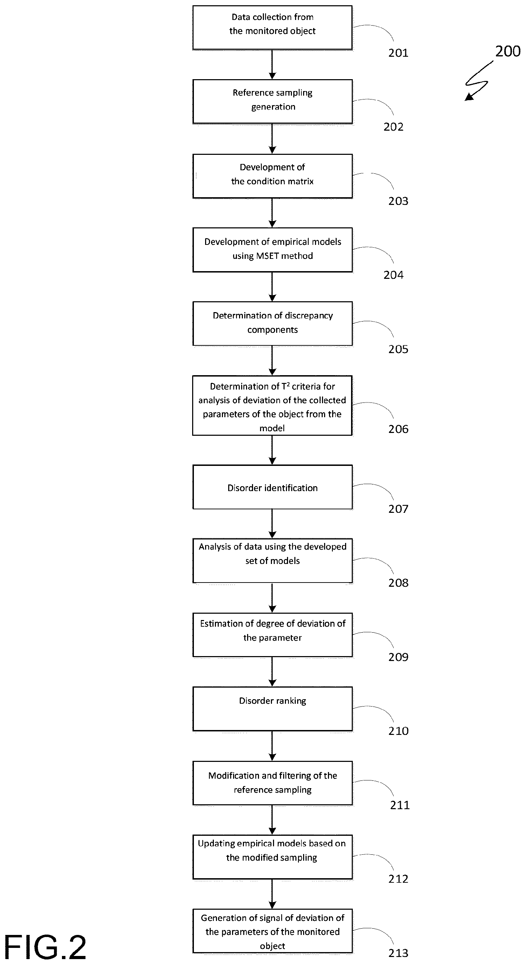

Fig. 2 shows method (200) which is implemented at the said upper level server (180) for monitoring and analysis of technical the monitored object status (10).

At the stage (201) the upper level server (180) collects data characterizing process the monitored object status (10) according to readings collected from sensors (11).

Empirical models for prediction of the monitored object status (10) are built using statistical methods based on sampling of values of process parameters of the object (10) during operating period assumed as a reference. At the stage (202) the received parameters of monitored object (10) are used to form a reference sampling of operating parameters of the monitored object (10) consisting of the said parameters values of process status of the object (10). Each of the parameters is a point of a sample which corresponds to the time interval of the monitored object continuous operation.

Then, at stage (203) the status matrix is developed from the components of the points of the reference sample where the values of the said operating parameters of the monitored object (10) are used as components. Then, at stage (204) using MSET (Multivariate State Estimation method) method with the said status matrix obtained at stage (203) the empirical models of prediction of the monitored object status are developed and each of these models reflects the observed point of the monitored object status in multivariate space of object (10) operating parameters to the point which models the object status (10). Using the status matrix the respective empirical model is calculated for each point of reference sampling.

In the models built using MSET method the measure of the deviation of the behaviour is determined using a conformity - a function estimating the degree of conformity of sample points. In method MSET the reference period sample matrix is developed from components of the most characteristic points of reference sample, i.e. points characterizing the parameters which in case of deviation can result in the failure of the entire monitored object (10).

At stage (205) the components of discrepancies are determined based on difference of components of the observed point and point modelling the object status. The criteria $T^2$ (stage 206) is calculated based on the specific discrepancies components, this criteria characterizes the deviation of the values of process parameters of the monitored object from the model in the observed point in space. Statistic criteria $T^2$ is a quadratic form of normalized discrepancies. The elements of pseudo inverse matrix of correlation matrix for normalized discrepancies of the reference sample are coefficients of this quadratic form. Deviations of models from the reference sampling points (discrepancies) are processed statistically for development of inverse covariance matrices used for calculation of statistical parameter $T^2$ (stage 206) of conformance of process parameters of its model to a random point of space and for calculation of malfunctions of the components - numeric parameters of the degree of impact of discrepancies of each component on the criteria $T^2$.

At stage (207) the malfunctions are determined reflecting the degree of the operation parameters impact of the monitored object (10) on the said deviation of the process parameters of the monitored object as a difference of criteria $T^2$ and quadratic forms of normalized discrepancies with coefficients of pseudoinverse matrix for the matrix developed from the said correlation matrix where the line and column corresponding to this indicator of the performance of the object are substituted by zero value.

At stage (208) the analysis of collected information from the monitored object (10) is performed using developed empirical models by comparison of the collected parameters of the monitored object (10) with parameters of model in defined time interval.

Then, at stage (209) using the said criteria $T^2$ the degree of deviation of the collected parameters of the monitored object is determined in the defined time interval from parameters of empirical models and identification of the malfunctions for such parameters. The decision about deviation in behaviour for the collected process parameters is taken based on the single calculation criteria $T^2$ and the reasons for changes are characterized by a set of calculated malfunctions. The model has a statistical character and the conclusion about change of the object's technical status requires detection of clear deviation of criteria $T^2$ beyond limit value for a certain time interval (not at separate moments of this interval).

OMPS automatically detects at early stage in on-line mode the changes in "functional" technical status based on deviations of one integral parameter - criteria T2 and localized list of main arguments (process parameters) making the main contribution in the deviation of technical status from reference statistical model which significantly simplifies the identification of any initiating defect from the existing multitude, the arguments are selected so that they correspond to the main hazard to the technical device and does not mask the initiation of these hazards by less significant problems.

Let us consider that

$$x(t_j) = \begin{bmatrix} x_1(t_j) \ x_2(t_j) \ x_3(t_j) \dots x_L(t_j) \end{bmatrix}^T$$

elements of the sample for time moments $t_j$.

Therefore, state matrix D is determined by the ratio:

$$D = \begin{bmatrix} x(t_1) \ x(t_2) \ x(t_3) \dots x(t_M) \end{bmatrix}.$$

It consists of the most characteristic points of the sample.

Let $x \otimes y$ refers to the conformity operation (as a function of two vectors of process parameters x and y).

Then "the product"

$$\widehat{w} = (D^T \otimes D)^{-1} \cdot (D^T \otimes x_{in}) \quad,$$

wherein the sign $\otimes$ means the conformity operation, it can be considered as the decomposition of the measurement vector $x_{in}$ by vectors of training set composing the state matrix. The decomposition $\hat{w}$ vector is being rated according to Nadaraya-Watson equation:

$$w = \frac{\widehat{w}}{\sum \widehat{w}_j}.$$

Using vector w, it is possible to estimate "normal" value of $x_{est}$ the measurement vector:

$$x_{est} = D \cdot w,$$

which is a projection of the vector of measurements $x_{in}$ onto space of the "normal" status of system determined by matrix D. Therefore the difference of these vectors (discrepancy)

$$r = x_{est} - x_{in}$$

is the evaluation of malfunction of the system, its deviation from normal status.

The discrepancy is normalized for entire sample

$$\epsilon_i = (r_i - \overline{r_i})/\sigma_i = \left[ (x_{in_i} - x_{est_i}) - \overline{(x_{in_i} - x_{est_i})} \right]/\sigma_i \ ,$$

wherein $\sigma_i$ are standard deviations of the discrepancy for i measurement from its average value.

Let $\Sigma$ be a covariance matrix for vectors $\epsilon$:

$$\Sigma = \begin{pmatrix} \sigma_1^2 & \sigma_{12} & \dots & \sigma_{1L} \\ \sigma_{21} & \sigma_2^2 & \dots & \sigma_{2L} \\ \dots & \dots & \dots & \dots \\ \sigma_{L1} & \sigma_{L2} & \dots & \sigma_L^2 \end{pmatrix} \ , \qquad \sigma_{ik} \equiv cov(\epsilon_i, \epsilon_k) = \overline{\epsilon_i \epsilon_k}.$$

Then,

$$T^2 = \epsilon^T \Sigma^{-1} \epsilon \ .$$

malfunction j is calculated using a matrix that is pseudo inverse to the matrix obtained from $\Sigma$ by zeroing the j lines and columns. The similar quadratic form is calculated from this pseudo inverse matrix and is deducted from $T^2$. It results in the j malfunction.

MSET method also allows to calculate limit value $T^2$ for the defined reliability level. If value $T^2$ does not exceed this limit value the decision is taken that the obtained parameters conform with behaviour of the object in the reference period. If the limit value is exceeded it is considered that obtained set of parameters does not correspond to the behaviour of the object in the reference period. In this case the ranking of malfunctions indicates the parameters whose behaviour makes the greatest contribution to the detected changes of the monitored object status (stage 210).

Then, at stage (211) the modification of the reference sample is performed by its replenishment with points for a new time interval and filtration of points corresponding to the operating mode described by the model and corresponding to a new technical the monitored object status.

Among all operating parameters whose signals are transmitted from lower level server of PCMS (150), only those values are selected whose changes can result in changes of the technical the monitored object status (10). Development of models comprises development of statistical and dynamic models. Hence, only 100-130 parameters out of a lot of parameters are used to develop the model.

Also, there are additional requirements for data arrays required for development of the models:

- for statistical model, the preferable and sufficient sampling rate is provided by the recording of the values changes once in 10 minutes, while for dynamic model, once per second;

- the amount of archived data assumed as a reference before development of the model should be accumulated during certain time period, for example, during one year of continuous operation of the power unit.

At stage (212) the empirical models are updated based on filtered sampled data and signal is generated informing about deviation of at least one parameter of the monitored object (10) based on the updated model (stage 213).

Thus, the on-line model characterizes the degree of change of technical status by single parameter - $T^2$ criteria and determines the degree of impact of deviation for each of the signal received from sensors (11) on the recorded deviation.

The said procedure of processing of the object sensors signals has high sensitivity to changes in behaviour of the monitored technical object (10) allowing to identify these changes at early stage and to determine factors which cause these changes.

The most important aspect of the OMPS (100) is complete automation of detection of changes in technical status and the list of main parameters making the greatest contribution into the performance of the monitored object (10) ranked by weight which allows to exclude subjective factor both in the on line and off-line mode during investigation of incidents and accidents based on provided archived data.

The operation of the monitored object (10) is related to the processes occurring in it at various times and at different levels of significance for its safe functioning.

As examples, we can consider the following. Pressure at AFCS filters of the turbine unit changes faster than in many other processes, those, for example, that significantly affect vibration. At the same time, the development of the vibration of the monitored object (10) can result in more serious consequences, however, due to faster changes at AFCS filters the signals related to these changes have greater contribution into the criteria $T^2$ masking phenomena that potentially more hazardous in their effects. For this reason the above modelling tools are used to determine the malfunctions with the strongest impact on criteria $T^2$ and the malfunctions masking the most important signals are identified and removed from the main on-line model.

Auxiliary models and physical modelling modules are used to account for the effect of excluded parameters.

The behaviour of the turbine unit under various loads can vary significantly, so not a single model is built to model its behaviour, but a set of models, which correspond to different operating modes. Switching between mode models is performed automatically with the on-line simulation in accordance with the status for changing the mode of operation of the monitored object (10). In OMPS (100), on-line models are created for different modes of operation of the monitored object (10), for example, in the case of power equipment:

- Nominal load mode;

- Intermediate load mode;

- Low load mode;

- Load increase mode;

- Load decrease mode;

- Start-up mode;

- Rundown mode;

- Idle mode;

- Barring mode, etc.

Models are developed for each of these modes based on the reference period sample data and used for on-line modelling.

The analysis of changes of technical status and reasons that caused them is conducted based on the values of the maximum malfunctions. The relationships of corresponding signals with time and other signals with the highest malfunction values are studied.

The detected deviations, implemented measures and results are recorded for automation of the analysis of arising problems. Such statistics allows for development of rules for identification of parts and components with expected future problems.

The simplest variant of such rules is realized using defects matrix. Each defect is correlated with the resulting malfunctions (the weight - non-zero number is assigned to the malfunction line and defect column in defects matrix). Then, the weights are summed with coefficients of rank of the malfunction for the most significant malfunctions. The highest values of ranking characterize the degree of probability of a defect. The defects matrix is updated based on accumulated statistics.

For example, if the monitored object (10) is a mobile object (vehicle), its units designed to accumulate information about the technical status of the vehicle (10) or its individual assemblies will act as sensors (11) from which the information will then be transmitted to the controllers (12) for further processing. The information can be transmitted both over wired and wireless data transmission channels.

Additionally, expert modules based on empirical and physical models can be used, which are also important for analysing the state of the object (10). In particular, these are regression analysis modules, and modules designed to analyse specific parameters of the object (10), for example, the efficiency of the compressor, the location of the heart of the thermal field at the outlet of the gas turbine, the wear of an element, etc.

For parameters with limit values, e.g. for vibration RMS (root mean square) value, the regression analysis allows to estimate the period of reaching the limit values. Regression is calculated with filtering by the mode of operation of the monitored object (10).

1.5...3% drop of the compressor efficiency ratio indicates clogging of compressor. Expert module of calculation of efficiency ratio according to the physical model and estimation of the efficiency degradation period to the specified value determines the compressor flushing frequency.

Thermal field epicentre position monitoring module at the gas turbine exhaust allows to compare turbine status in different time periods based on heterogeneity of distribution of temperatures at the exhaust.

In addition to the main on-line model of the object the specific empirical models are developed for specific subsystems of the monitored object. They are used both in on-line and off-line modes.

For example, to monitor the operation of the heating system in the room, a model is created that analyses the readings of the heating boiler and the amount of heat transferred from it to the heating elements, followed by reading the load indicators of the boiler and the wear of the heat carriers.

OMPS (100) can also be used as an example in smart house management systems. In this case, OMPS (100) receives data from the smart house controls through the central controller and, by processing and monitoring the said elements, determines its technical state. By using the said calculation method to detect discrepancies in the operation of individual units or devices of the smart house management system, their current technical status is determined, as well a possible failure in their operation may be predicted, and the critical parameters that could lead to the failure of the entire central management system may be determined.

As mentioned above, if OMPS (100) is used to monitor mobile objects (for example, transport vehicles), models can be created to control a particular unit (for example, an engine), or to analyse the technical status of the entire transport vehicle and predict, which parts may fail.

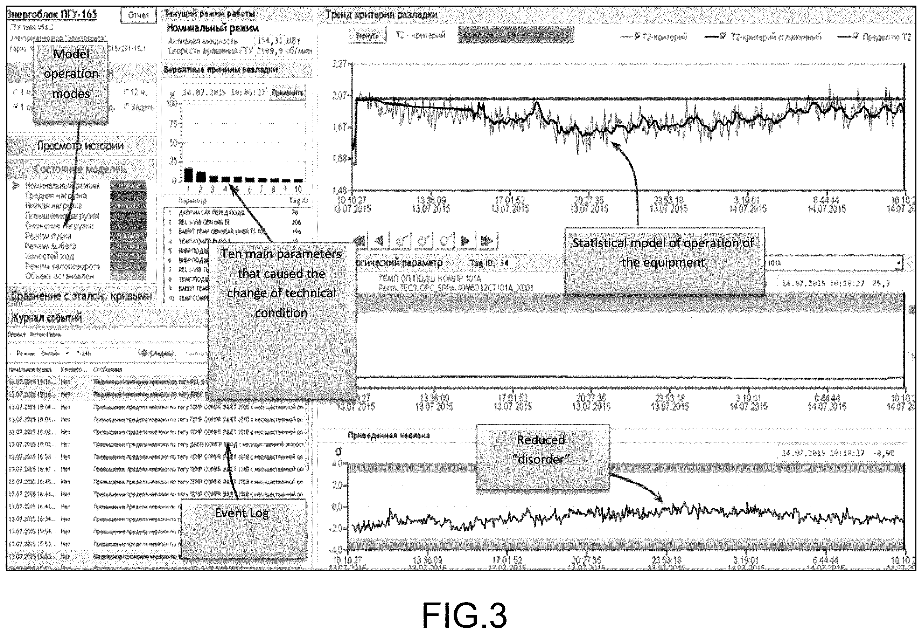

Fig. 3 shows example of OMPS (100) interface which allows in on-line mode to detect minor deviations in the performance of the turbine unit in advance before critical situations.

Collected results are used for generation of notifications for turbine operational staff and for service staff and reports about the technical status for the required operating periods are prepared.

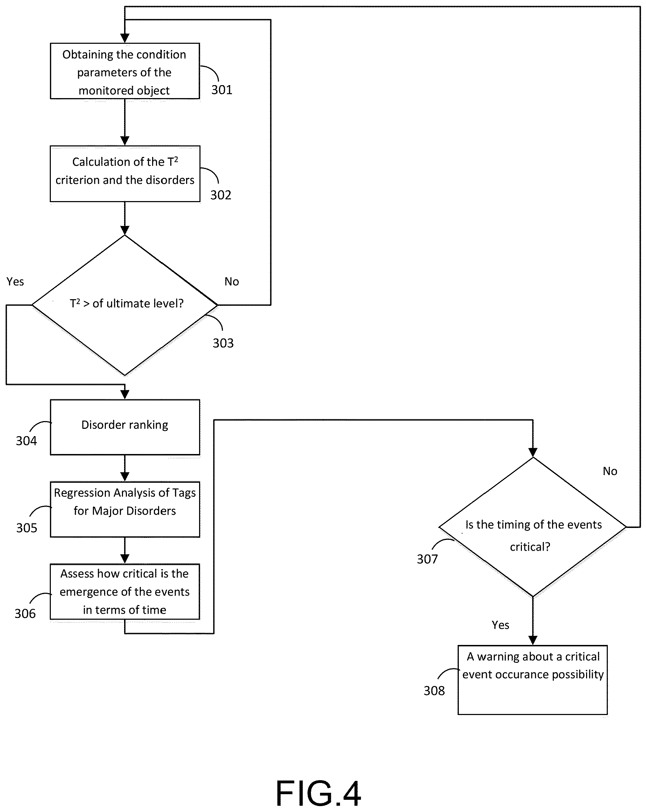

Fig. 4 gives a general idea of how the prediction algorithm works to analyse the further operation of the monitored object (10). The analytical processing cycle begins with obtaining the parameter values of the current status (301) of the monitored object (10). Based on the initial data (301), which characterize the technical the monitored object status (10), the values of discrepancies are calculated, as well as $T^2$ criterion and malfunction value (302), using the simulation algorithm.

Next, it is checked if the $T^2$ criteria exceeds the limit values (303) and how much. If no excess is detected, then the next step (the next analytical processing cycle) is executed, which iteratively begins with step (301) and analyses the new data received from the monitored object (10). If, at step (303), is comes out that the $T^2$ criterion exceeds the maximum specified level, then the transition to the stage where malfunctions (304) are ranked, is performed.

Then, a regressive analysis of the older malfunction tags (305) is performed, after which the events are estimated in terms of which limit values (306) may be achieved earlier. Then, the system evaluates the timing of the occurrence of critical events (307), and if the probability of such an occurrence is high, a warning is issued about the likelihood of the occurrence of a critical event (308); otherwise the next cycle of analytical processing (301) begins.

The required information, namely, after receiving of signals of deviation of the monitored object (10) operation can be transmitted using commonly used wired and wireless communication systems: LAN Ethernet (LAN), Wi-Fi, GSM, WiMax or MMDS (Multichannel Multipoint Distribution System), etc.

Information from upper the level system (18) of OMPS (100) can be transmitted to various remote computers such as AWS based on IBM PC or mobile devices of system users, for example, smartphones, tablets, laptops receiving data from the upper level server (180) using emails and/or SMS and/or PUSH-notifications.

Additionally the OMPS (100) provides an analysis of the technical state of the object (10) at the request of the user by sending messages to the server that is initiated via an electronic device (smartphone, laptop) or by setting the receipt of regular reporting for a specified period of time (daily, hourly, weekly, etc.) on the object's technical status and the warning of the failure of any of its parts or the entire object (10).

The monitoring of the monitored object (10) can be performed using standard web browser and Internet portal designed for display of the monitored object parameters status (10). Also operation monitoring of the monitored object (10) can be performed using special software application installed on the user devices.

Notification about critical status or necessity of inspection of some elements of the monitored object (10) which in future can result in degradation of power of the object (10) operation or its failure will be sent to devices until the server (180) in response to the sent notifications receives a message that notification was viewed by the user. This function can be implemented by sending emails with defined time intervals or using specialized application or web-portal which in response to the identification of the user related to the system of notification of the upper level server (180) analyses the status of receipt of the said notification by the said user. The status can be linked to the change of the parameter of the notification on server which can be a record in data base about the receipt of a response from the user device.

The provided description of the claimed invention comprises the preferable variants of the claimed invention embodiment and should not be construed as limiting another embodiments which do not go beyond the claimed scope of legal protection and which should be clear to those who skilled in the art.

References:

1. V.V.Kudryavyi System disintegration of a system // First industrial electronic mass media RusCable.Ru, ed. No.ФС77 28662. 08.03.2016.

2. E.K.Arakelyan, G.D.Krokhin, V.S.Mukhin Concept of "soft" regulation and maintenance of power units of TPP based on the smart diagnostics // Bulletin of Moscow Power Engineering Institute. 2008. No. 1. P. 14-20.

3. Zavaljevski N., Gross K.C. Sensor fault detection in nuclear power plants using multivariate state estimation method and support vector machines // Thirn Intern. Conf. of the Yugoslav nuclear society. Belgrade, Yugoslavia: Printed in USA by Argonne laboratory. 2000.

4. Gross. K.C. MSET. Advanced pattern recognition system for ultra-reliable on-line instrument surveillance // Argonne national laboratory. 2000.

5. MSET: An Early Warning System with Broad Industrial Application // Argonne national library.

**Claims**

1. A method for on-line monitoring and prediction of objects' technical condition, comprising the following stages:

- receiving data from the monitored object, characterizing performance parameters of the said object;
- based on the collected object parameters, developing object parameters reference sample, consisting of the said parameters values being the sample points, wherein the said sample corresponds to a time interval of the monitored object continuous operation;
- developing the status matrix from points components of the reference sample wherein components are values of the said operating parameters of the monitored object;
- based on MSET (Multivariate State Estimation Technique) method with the said status matrix, the empirical models of prediction of a monitored object status are developed and each of these models reflects the set point of the monitored object status in multivariate space of the object operating parameters to a point, modeling an object status;
- based on the components inconsistency of the set point and the point, modeling an object status, the discrepancies components, based on which the criteria T2 is calculated, where T2 characterizes the deviation of the process parameters values of the monitored object from the model in the set point of space, wherein T2 is a quadratic form of normalized discrepancies with coefficients being the elements of pseudoinverse matrix of correlation matrix for normalized discrepancies of the reference sample;
- malfunctions determination reflecting the impact degree of the object's operating parameters on the said deviation of the monitored object's process parameters as difference of criteria T2 and normalized discrepancies' quadratic forms with coefficients of pseudoinverse matrix for the matrix developed from the said correlation matrix where the line and the column, corresponding to this indicator of the object operation, are zeroed;
- analysing of the collected information from the monitored object using developed empirical models by comparison of the monitored object's collected parameters with model parameters in defined time interval;
- determining through using the said criteria T2 of the degree of deviation of the collected parameters of the monitored object in the specified time interval from the empirical models parameters and identifying malfunctions for such parameters;
- ranking the computed malfunctions to identify the parameters making the greatest contribution to the change of the monitored object status;
- modifying reference sample by its replenishment with points for a new time interval and filtration of points corresponding to the functioning mode described by the model and corresponding to the new functional status the monitored object;
- updating the empirical models based on filtered sample;
and
- generating a signal that informs about deviation of at least one parameter of the monitored object based on the updated model.

2. The method according to claim 1, wherein the empirical models are statistical and dynamic models.

3. The method according to claim 2, wherein the sampling rate is set for each type of models.

4. The method according to claim 3, wherein each model is determined by a set of matrix calculated using MSET method.

5. The method according to claim 1, wherein for calculation of the criteria T2 the components of discrepancies are normalized based on average values of discrepancies and their mean quadratic deviations for the reference sample.

6. The method according to claim 1, wherein the empirical models are developed for a multitude of different operating modes of the monitored object.

7. The method according to claim 6, wherein in case of changing the monitored object' operating mode the empirical model corresponding to this mode is automatically switched.

8. The method according to claim 1, wherein the defects matrix is developed based on the data characterizing the deviations of the monitored object parameters.

9. The method according to claim 8, wherein the degree of the impact of malfunctions is determined for each identified defect based on the defects matrix.

10. The method according to claim 9, wherein the degree of the impact is a weight coefficient reflecting the degree of the impact of the malfunction on the defect.

11. The method according to claim 10, wherein weight coefficients are summed for ranking of malfunctions.

12. The method of claim 8, wherein the defects matrix is updated with collection of data of process parameters of the monitored object.

13. The on-line monitoring and prediction systems (OMPS) of technical objects, comprising a group of sensors related with the monitored object and transmitting information about process parameters of the said object to primary controllers which are related with main APCS server of the monitored object, configured to accumulate data collected from controllers and subsequent transmission of the said data to the local lower level of OMPS comprising at least lower level server of OMPS from which by data network the data of process parameters of the monitored object are transmitted to the local upper level of OMPS which comprises the upper level server configured to implement the method of on-line monitoring and prediction of process parameters status as described according to any of claims 1-12.

14. The system according to claim 13, wherein data from controllers to the local lower level of OMPS are transmitted via LAN.

15. The system according to claim 13, wherein the local lower level of OMPS is demilitarized area organized using firewalls.

**16.** The system according to claim 15, wherein information is received and transmitted via local lower level of OMPS via the said firewalls.

**17.** The system according claim 13, wherein data is transmitted from the main server of APCS to the local lower level of OMPS using OPC protocol (OLE for Process Control).

**18.** The system according to claim 13, wherein Internet is used as the data transmission network.

**19.** The system according to claim 18, wherein information through the Internet is transmitted using secured data link.

**20.** The system according to claim 13, wherein the upper level server is configured to automatically update empirical models when data is received from the monitored objects.

**21.** The system according to claim 13, wherein the upper level server is configured to transmit information about the monitored object status to remote devices of users.

**22.** The system according to claim 21, wherein the data is transmitted to remote devices of users using wired and/or wireless communication.

**23.** The system according to claim 22, wherein Ethernet LAN is used as the wired communication type.

**24.** The system according to claim 22, wherein wireless communication type is selected from the following group: Wi-Fi, GSM, WiMax or MMDS (Multichannel Multipoint Distribution System).

**25.** The system according to claim 22, wherein the data about the monitored object status are transmitted using email and/ or SMS and /or PUSH-notifications to remote devices of users.

100

Upper level
Upper level server

180          18

Internet

Secure
channel

17

LAN                16

PRMS demilitarized
lower level

Firewall (router)          15

151

153   Server-to-Server Collector

OMPS lower
level server

150

OPC Collector          152

Firewall (router)          151

OPC-protocol          OPC-Tunnelling device  14

Process network LAN

Object's APCS
servers          13

Main APCS server

130

Primary controller          12

Sensors of the monitored
object          11

monitored object          10

FIG.1

FIG.2

```
┌─────────────────────────┐
│     Data collection from │
│     the monitored object │
└─────────────────────────┘
            │              201
            ▼
┌─────────────────────────┐
│   Reference sampling     │
│   generation             │
└─────────────────────────┘
            │              202
            ▼
┌─────────────────────────┐
│   Development of         │
│   the condition matrix   │
└─────────────────────────┘
            │              203
            ▼
┌─────────────────────────┐
│  Development of empirical models │
│  using MSET method       │
└─────────────────────────┘
            │              204
            ▼
┌─────────────────────────┐
│  Determination of discrepancy │
│  components              │
└─────────────────────────┘
            │              205
            ▼
┌─────────────────────────┐
│  Determination of T² criteria for │
│  analysis of deviation of the collected │
│  parameters of the object from the │
│  model                   │
└─────────────────────────┘
            │              206
            ▼
┌─────────────────────────┐
│   Disorder identification │
└─────────────────────────┘
            │              207
            ▼
┌─────────────────────────┐
│  Analysis of data using the developed │
│  set of models           │
└─────────────────────────┘
            │              208
            ▼
┌─────────────────────────┐
│  Estimation of degree of deviation of │
│  the parameter           │
└─────────────────────────┘
            │              209
            ▼
┌─────────────────────────┐
│   Disorder ranking       │
└─────────────────────────┘
            │              210
            ▼
┌─────────────────────────┐
│  Modification and filtering of the │
│  reference sampling      │
└─────────────────────────┘
            │              211
            ▼
┌─────────────────────────┐
│  Updating empirical models based on │
│  the modified sampling   │
└─────────────────────────┘
            │              212
            ▼
┌─────────────────────────┐
│  Generation of signal of deviation of │
│  the parameters of the monitored │
│  object                  │
└─────────────────────────┘
                           213
```

200

FIG.3

Obtaining the condition
parameters of the
monitored object
301

Calculation of the T²
criterion and the disorders
302

T² > of ultimate level?
Yes
No
303

Disorder ranking
304

Regression Analysis of Tags
for Major Disorders
305

Assess how critical is the
emergence of the events
in terms of time
306

Is the timing of the events
critical?
No
307

Yes

A warning about a critical
event occurance possibility
308

FIG.4

## INTERNATIONAL SEARCH REPORT

| International application No. |
|---|
| PCT/RU 2017/050073 |

**A. CLASSIFICATION OF SUBJECT MATTER**
G05B 17/02 (2006.01); G06F 17/16 (2006.01); G05B 19/048 (2006.01)

According to International Patent Classification (IPC) or to both national classification and IPC

**B. FIELDS SEARCHED**

Minimum documentation searched (classification system followed by classification symbols)
G06N 7/00-7/08, G06F 3/00-3/18, 17/16, G05B 23/00-23/02, 19/00-19/048, 17/00-17/02, 13/00-13/04, 1/00-1/04

Documentation searched other than minimum documentation to the extent that such documents are included in the fields searched

Electronic data base consulted during the international search (name of data base and, where practicable, search terms used)
PatSearch (RUPTO internal), Esp@cenet

**C. DOCUMENTS CONSIDERED TO BE RELEVANT**

| Category* | Citation of document, with indication, where appropriate, of the relevant passages | Relevant to claim No. |
|---|---|---|
| P, X | RU 2626780 C1 (AKTSIONERNOE OBSCHESTVO "ROTEK") 01.08.2017, the claims | 1-25 |
| A | US 8014880 B2 (FISHER-ROSEMOUNT SUSTEMS, INC.) 06.09.2011, the claims | 1-25 |
| A | US 2016/0160762 A1 (GENERAL ELECTRIC COMPANY) 09.06.2016, the claims | 1-25 |
| A | RU 2568291 C1 (ROSSYSKAYA FEDERATSIYA, OT IMENI KOTOROI VYSTUPAET MINISTERSTVO OBORONY ROSSYSKOI FEDERATSII et al.) 20.11.2015, the claims | 1-25 |

☐ Further documents are listed in the continuation of Box C.   ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 October 2017 (11.10.2017) | 16 November 2017 (16.11.2017) |

| Name and mailing address of the ISA/ RU | Authorized officer |
|---|---|
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2313815
- US 20160160762 A
- US 8014880 B

**Non-patent literature cited in the description**

- System disintegration of a system. **V.V.KUDRYAVYI.** First industrial electronic mass media RusCable.Ru. 08 March 2016
- **E.K.ARAKELYAN ; G.D.KROKHIN ; V.S.MUKHIN.** Concept of ''soft'' regulation and maintenance of power units of TPP based on the smart diagnostics. *Bulletin of Moscow Power Engineering Institute,* 2008, 14-20
- Sensor fault detection in nuclear power plants using multivariate state estimation method and support vector machines. **ZAVALJEVSKI N. ; GROSS K.C.** Thirn Intern. Conf. of the Yugoslav nuclear society. Argonne laboratory, 2000
- **GROSS. K.C.** MSET. Advanced pattern recognition system for ultra-reliable on-line instrument surveillance. *Argonne national laboratory,* 2000
- MSET: An Early Warning System with Broad Industrial Application. *Argonne national library*